# EUROPEAN PATENT APPLICATION

(11) **EP 4 319 232 A1**
(43) Date of publication of application: **07.02.2024**
(21) Application number: 22790854.8
(22) Date of filing: 02.04.2022
(51) Int. Cl.: H04W 12/06, H04W 76/10, H04W 12/08, H04L 9/32

(54) **COMMUNICATION METHOD AND APPARATUS**

(30) Priority: 21.04.2021 CN 202110430627
(71) Applicant: Huawei Technologies Co., Ltd., Longgang Shenzhen, Guangdong 518129 (CN)
(72) Inventor: LIU, Fei, Shenzhen, Guangdong 518129 (CN); WANG, Donghui, Shenzhen, Guangdong 518129 (CN); TOOR, Gurbakshish Singh, Shenzhen, Guangdong 518129 (CN)
(74) Representative: Isarpatent
(86) International application number: PCT/CN2022/085112
(87) International publication number: WO 2022/222745

(57) **Abstract**

This application provides a communication method and apparatus. The method includes: A terminal device initiates a request to a first network element device in a public network core network to access a second network element device in a private network core network. If the private network core network and the public network core network are in a same trusted domain, the first network device sends first indication information to the second network element device, where the first indication information indicates the second network element device to skip performing an authentication operation on the terminal device. Compared with centralized authentication, embodiments of this application provide a new distributed authentication manner. Further, network devices in a same trusted domain may perform one authentication operation on a same accessing terminal device, to reduce signaling overheads.

## Description

### CROSS-REFERENCE TO RELATED APPLICATIONS

This application claims priority to Chinese Patent Application No. 202110430627.0, filed with the China National Intellectual Property Administration on April 21, 2021, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a network architecture of a 5th generation (5th generation, 5G) communication system supports connection through a bus, but security access control still adopts centralized authentication and authorization. The 5G network architecture and a subsequent security architecture cannot support application scenarios of decentralization/weak centralization and multi-party consensus and mutual trust in a future 6th generation (6th generation, 6G) communication system.

### SUMMARY

This application provides a communication method and apparatus, to provide a distributed authentication manner.

According to a first aspect, an embodiment of this application provides a communication method, including: A first network element device in a public network core network receives a first registration request sent by a terminal device, where the first registration request is used to request the terminal device to access a second network element device in a private network core network. The first network element device sends a first query request to a third network element device in the public network core network. The first network element device receives a first query response from the third network element device. The first network element device sends first indication information to the second network element device if the first query response indicates that the second network element device is in a trusted domain associated with the first network element device, where the indication information indicates the second network element device to skip performing an authentication operation on the terminal device.

According to the foregoing solution, if a trusted entity in a same trusted domain successfully authenticates user equipment (user equipment, UE), when establishing a connection to the UE, another trusted entity in the trusted domain may skip authentication on the UE, to implement multi-party consensus and mutual trust. Compared with a manner of centralized authentication and authorization, a secure access mechanism that can be implemented in a decentralization/weak centralization network architecture is provided.

In a possible implementation method, before the first network element device in the public network core network receives the first registration request sent by the terminal device, the first network element device receives a second registration request sent by the terminal device, where the second registration request is used to request to access the first network element device. The first network element device establishes a connection to the terminal device.

According to a second aspect, an embodiment of this application provides a communication method, including: A third network element device in a public network core network receives a first query request from a first network element device in the public network core network, where the first query request is used to request to query whether a second network element device is in a trusted domain associated with the first network element device. The third network element device sends a first acquisition request to a fourth network element device in the public network core network. The third network element device receives a first acquisition response from the fourth network element device, where the first acquisition response includes information about the trusted domain associated with the first network element device. The third network element device determines, based on the information about the trusted domain and an identifier of the second network element device, whether the second network element device is in the trusted domain associated with the first network element device. The third network element device sends a first query response to the first network element device, where the first query response indicates whether the second network element device is in the trusted domain associated with the first network element device.

According to the foregoing solution, a function of a trust anchor is defined, that is, a conventional telecommunication network and a blockchain system may be deeply integrated. For example, information about a trusted domain may be generated by the blockchain system, and stored in a database of the telecommunication network by using the third network element. A lack of a trust capability of the telecommunication network is complemented by a natural trust attribute of the blockchain system. If a trusted entity in a same trusted domain successfully authenticates a UE, when establishing a connection to the UE, another trusted entity in the trusted domain may skip authentication on the UE, to implement multi-party consensus and mutual trust. Compared with a manner of centralized authentication and authorization, a secure access mechanism that can be implemented in a decentralization/weak centralization network architecture is provided.

According to a third aspect, an embodiment of this application provides a communication method, including: A second network element device in a private network core network receives a first registration request from a first network element device in a public network core network, where the first registration request includes an identifier of a terminal device, and is used to request the terminal device to access the second network element device. The second network element device skips performing an authentication operation on the terminal device if first indication information from the first network element device is received and the first indication information indicates that the second network element device and the first network element device are in a same trusted domain.

According to the foregoing solution, if a trusted entity (for example, the first network element device) in a same trusted domain successfully authenticates a UE, when establishing a connection to the UE, another trusted entity (for example, the second network element device) in the trusted domain may skip authentication on the UE, to implement multi-party consensus and mutual trust, and save signaling overheads. Compared with a manner of centralized authentication and authorization, a secure access mechanism that can be implemented in a decentralization/weak centralization network architecture is provided.

In a possible implementation method, before the second network element device skips performing the authentication operation on the terminal device, the second network element device sends a second query request to a third network element device in the private network core network, where the second query request includes an identifier of the first network device, and is used to request to query whether the first network element device is in a trusted domain associated with the second network element device. The second network element device receives a second query response from the third network element device.

That the second network element device skips performing the authentication operation on the terminal device if the first indication information from the first network element device is received and the first indication information indicates that the second network element device and the first network element device are in the same trusted domain includes: The second network element device skips performing the authentication operation on the terminal device if the first indication information from the first network element device is received, the first indication information indicates that the second network element device and the first network element device are in the same trusted domain, and the second query response indicates that the first network element device is in the trusted domain associated with the second network element device.

According to a fourth aspect, an embodiment of this application provides a session establishment method, including: A first device in a first trusted domain receives a session establishment request from a second device in a second trusted domain, where the session establishment request includes a device certificate of the second device. The first device sends an acquisition request for a root certificate of the second device to a first network element. The first network element sends the acquisition request for the root certificate of the second device to an intermediate storage node. The first network element receives an acquisition response from the intermediate storage node. The first device receives an acquisition response from the first network element, where the acquisition response includes the root certificate of the second device. The first device performs verification on the device certificate of the second device by using the root certificate of the second device. The first device sends a session establishment response to the second device if the verification succeeds.

According to the foregoing solution, compared with an existing manner in which a secure session can be established, by using a root certificate locally configured with a trusted domain, only with a device configured with the root certificate, in this embodiment of this application, mutual authentication between devices in different trusted domains can be implemented, application scenarios are extended, operations such as configuration are reduced, an interaction process is simplified, and applicability is advanced. Further, the intermediate storage node deployed on a blockchain is tamper-resistant, thereby ensuring information security.

In a possible implementation method, before the first device in the first trusted domain receives the session establishment request from the second device in the second trusted domain, an operator device in the second trusted domain sends a root certificate of the second trusted domain to the intermediate storage node. The intermediate storage node receives the root certificate of the second trusted domain, and stores the root certificate of the second trusted domain.

According to a fifth aspect, an embodiment of this application provides a session establishment method, including: A first network device receives a modification request sent by a terminal device, where the modification request is used to request to modify user data. The first network device performs verification on whether the terminal device has modification permission. The first network device assigns a digital signature to the modification request if the verification succeeds, and sends the modification request assigned with the digital signature to a second network device. The second network device receives the modification request assigned with the signature, and performs verification on the modification request assigned with the signature. The second network device sends a data modification request to a blockchain node if the verification succeeds. The second network device receives a modification response of the blockchain node.

According to the foregoing solution, in a network scenario in which a conventional telecommunication network is combined with a blockchain system, more application such as storing user information in the blockchain node can be implemented, and a user is granted permission to modify personal user information, thereby increasing system flexibility and improving user experience.

According to a sixth aspect, an embodiment of this application provides a communication apparatus. The apparatus may be a core network device, or may be a chip used in the core network device. The apparatus has functions of implementing any one of the first aspect to the fifth aspect, or any embodiment of the first aspect or the fifth aspect. The functions may be implemented by hardware, or may be implemented by hardware executing corresponding software. The hardware or software includes one or more modules corresponding to the foregoing functions.

According to a seventh aspect, an embodiment of this application provides a communication apparatus, including a processor and a memory. The memory is configured to store computer executable instructions. When the apparatus runs, the processor executes the computer executable instructions stored in the memory, to enable the apparatus to perform the method according to any one of the first aspect to the fifth aspect, or any embodiment of the first aspect or the fifth aspect.

According to an eighth aspect, an embodiment of this application provides a communication apparatus, including units or means (means) configured to perform the steps in any one of the first aspect to the fifth aspect, or any embodiment of the first aspect or the fifth aspect.

According to a ninth aspect, an embodiment of this application provides a communication apparatus, including a processor and an interface circuit. The processor is configured to communicate with another apparatus through the interface circuit, and perform the method according to any one of the first aspect to the fifth aspect, or any embodiment of the first aspect or the fifth aspect. One or more processors are provided.

According to a tenth aspect, an embodiment of this application provides a communication apparatus, including a processor, configured to connect to a memory, and invoke a program stored in the memory, to perform the method according to any one of the first aspect to the fifth aspect, or any embodiment of the first aspect or the fifth aspect. The memory may be located inside the apparatus, or may be located outside the apparatus. One or more processors are provided.

According to an eleventh aspect, an embodiment of this application further provides a computer-readable storage medium. The computer-readable storage medium stores instructions. When the instructions are run on a computer, a processor is enabled to perform the method according to any one of the first aspect to the fifth aspect, or any embodiment of the first aspect or the fifth aspect.

According to a twelfth aspect, an embodiment of this application further provides a computer program product. The computer product includes a computer program, and when the computer program is run, the method according to any one of the first aspect to the fifth aspect, or any embodiment of the first aspect or the fifth aspect is performed.

According to a thirteenth aspect, an embodiment of this application further provides a chip system, including a processor, configured to perform the method according to any one of the first aspect to the fifth aspect, or any embodiment of the first aspect or the fifth aspect.

According to a fourteenth aspect, an embodiment of this application further provides a communication system, including: a first network element device in a public network core network, a second network element device in a private network core network, and a third network element device in the public network core network. The first network element device is configured to: receive a first registration request sent by a terminal device, where the first registration request is used to request the terminal device to access a second network element device in a private network core network, send a first query request to the third network element device, and receive a first query response from the third network element device. The first network element device sends first indication information to the second network element device if the first query response indicates that the second network element device is in a trusted domain associated with the first network element device, where the indication information indicates the second network element device to skip performing an authentication operation on the terminal device. The third network element device is configured to: receive the first query request from the first network element device, where the first query request is used to request to query whether the second network element device is in the trusted domain associated with the first network element device; send a first acquisition request to a fourth network element device in the public network core network, and receive a first acquisition response from the fourth network element device, where the first acquisition response includes information about the trusted domain associated with the first network element device; determine, based on the information about the trusted domain and an identifier of the second network element device, whether the second network element device is in the trusted domain associated with the first network element device; and send the first query response to the first network element device. The second network element device is configured to receive the first registration request from the first network element device in the public network core network, where the first registration request includes an identifier of the terminal device, and is used to request the terminal device to access the second network element device. The second network element device skips performing the authentication operation on the terminal device if the first indication information from the first network element device is received and the first indication information indicates that the second network element device and the first network element device are in a same trusted domain.

For beneficial effects of the sixth aspect to the fourteenth aspect and implementations thereof, refer to the descriptions of beneficial effects of the methods according to the first aspect to the fifth aspect and implementations thereof.

These aspects or other aspects of this application are simpler and more comprehensible in descriptions of the following embodiments.

### BRIEF DESCRIPTION OF DRAWINGS

FIG. 1A is a schematic diagram of a 5G network architecture based on a service-based architecture;
FIG. 1B is a schematic diagram of a 5G network architecture based on a point-to-point interface;
FIG. 2A is a schematic diagram of an architecture of a communication system according to an embodiment of this application;
FIG. 2B is a schematic diagram of an architecture of a communication system based on a point-to-point interface according to an embodiment of this application;
FIG. 3 is a schematic diagram of an architecture of a data storage system according to an embodiment of this application;
FIG. 4 is a schematic diagram of an architecture of a communication system according to an embodiment of this application;
FIG. 5A and FIG. 5B are schematic flowcharts corresponding to a communication method according to an embodiment of this application;
FIG. 6 is a schematic flowchart corresponding to a session establishment method according to an embodiment of this application;
FIG. 7 is a schematic flowchart corresponding to a data update method according to an embodiment of this application;
FIG. 8 is a schematic diagram of a structure of a communication apparatus according to this application; and
FIG. 9 is a schematic diagram of a structure of a communication apparatus according to this application.

### DESCRIPTION OF EMBODIMENTS

First, some technical terms in embodiments of this application are described.
1. Blockchain: Specifically, a blockchain is formed by connecting blocks one by one according to a hash function, that is, a hash value of a previous block needs to be written to a header of a next block. Each block includes a block header and a block body. Data in the block header includes a hash, a timestamp, a random number, a transaction merkle tree (merkle) root, and the like of a previous block. The block body includes a transaction merkle tree. The merkle tree is formed by transactions one by one. The transaction is a carrier of on-chain data, and information stored in the transaction is not unchanged. Theoretically, any information may be stored.
2. A public land mobile network (public land mobile network, PLMN) is a network established and operated by government or an operator approved by the government for a purpose of providing land mobile communication services for public. The network is usually interconnected with a public switched telephone network (PSTN), to form a regional or national-scale communication network.
3. A virtual private network (virtual private network, NPN) is a private network established on a public network for encrypted communication, which is widely used in enterprise networks. A virtual private network (virtual private network, VPN) gateway implements remote access by encrypting data packets and translating destination addresses of data packets.

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more.

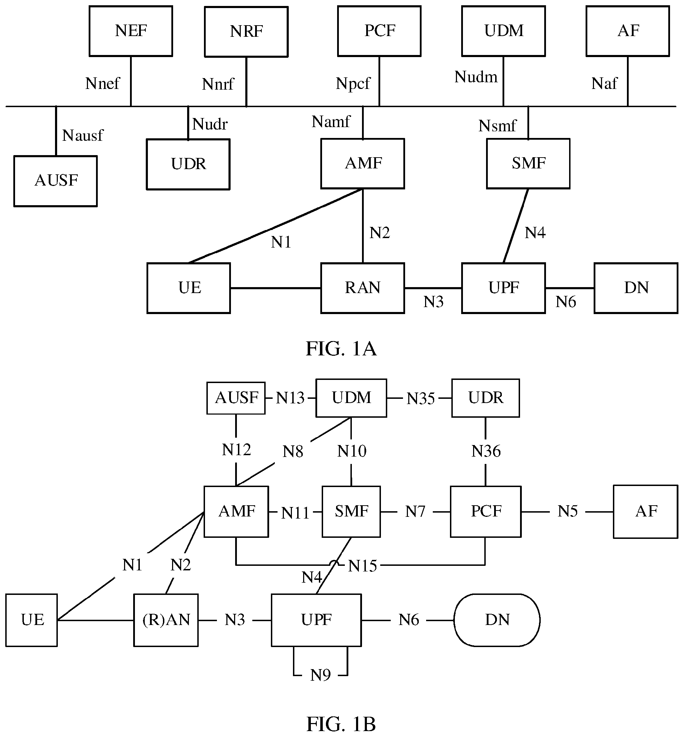

FIG. 1A is a schematic diagram of a 5th generation (5th generation, 5G) network architecture based on a service-based architecture. The 5G network architecture shown in FIG. 1A may include three parts: a terminal device part, a data network (data network, DN) part, and an operator network part. The following briefly describes functions of some of the network elements.

The operator network may include one or more of the following network elements: an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a radio access network (radio access network, RAN), a user plane function (user plane function, UPF) network element, a network slice selection function (network slice selection function, NSSF) network element (not shown in the figure), and the like. In the foregoing operator network, a part other than a radio access network part may be referred to as a core network part.

The terminal device (terminal device) is a device having a wireless transceiver function. The device may be deployed on the land, including an indoor or outdoor device, a handheld device, or an in-vehicle device; may be deployed on the water (for example, on a steamer); or may be deployed in the air (for example, on an air plane, a balloon, or a satellite). The terminal device may be a mobile phone (mobile phone), a pad (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a user equipment (user equipment, UE), or the like. The terminal device may be applied to communication systems of various radio access technologies, for example, a long term evolution (long term evolution, LTE) communication system, a 5G communication system, and another possible communication system, for example, a future communication system, such as a future 6th generation (6th generation, 6G) system. 5G includes new radio (new radio, NR) and a compatible part for radio access to LTE. LTE, 5G, and future 6G access not only include cellular network access, but also include other possible access manners including a compatible Wi-Fi network, underwater communication, satellite communication, visible light communication, and the like.

The terminal device may establish a connection to the operator network through an interface (for example, N1) provided by the operator network, and use a service such as data and/or voice provided by the operator network. The terminal device may further access the DN through the operator network, and use an operator service deployed on the DN and/or a service provided by a third party. The third party may be a service party except the operator network and the terminal device, and may provide a service such as data and/or voice for the terminal device. A specific representation form of the third party may be specifically determined based on an actual application scenario. This is not limited herein.

The RAN is a subnet of the operator network, and is an implementation system between a service node in the operator network and the terminal device. To access the operator network, the terminal device first passes through the RAN, and then may be connected to the service node in the operator network through the RAN. A RAN device is a device that provides a wireless communication function for the terminal device, and the RAN device is also referred to as an access network device. The RAN device includes, but is not limited to, a next generation base station (g NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseBand unit, BBU), a transmitting and receiving point (transmitting and receiving point, TRP), a transmitting point (transmitting point, TP), a mobile switching center, and the like.

The AMF network element mainly performs mobility management, access authentication/authorization, and the like. In addition, the AMF network element is responsible for transferring a user policy between a UE and a PCF.

The SMF network element mainly performs session management, execution of a PCF-delivered control policy, UPF selection, UE Internet Protocol (Internet Protocol, IP) address assignment, and the like.

The UPF network element is used as an interface UPF to a data network, and implements user-plane data forwarding, session-based or flow-level charging statistics, bandwidth restriction, and the like.

The UDM network element is mainly responsible for subscription data management, user access authorization, and the like.

The UDR is mainly responsible for storage and access of type data including the subscription data, policy data, application data, and the like.

The NEF network element is mainly configured for capability supporting and event exposure.

The AF network element mainly transfers requirements of an application side for a network side, for example, a quality of service (quality of service, QoS) requirement or user status event subscription. The AF may be a third-party functional entity or an application service deployed by the operator, for example, an IP multimedia subsystem (IP multimedia subsystem, IMS) voice call service.

The PCF network element is mainly responsible for policy control functions including charging on a session and a service flow-level, QoS bandwidth guarantee and mobility management, UE policy decision, and the like. In this architecture, PCFs connected to the AMF and the SMF are respectively corresponding to an AM PCF (PCF for Access and Mobility Control) and an SM PCF (PCF for Session Management), and may not be a same PCF entity in an actual deployment scenario.

The NRF network element may be configured to provide a network element discovery function, and provide network element information corresponding to a network element type based on a request of another network element. The NRF further provides network element management services, such as network element registration, update, deregistration, and network element status subscription and push.

The AUSF network element is mainly responsible for performing authentication of a user, to determine whether to allow the user or a device to access a network.

The NSSF network element is mainly configured to select a network slice, count users in the network slice, and the like.

The DN is a network located outside the operator network. The operator network may access a plurality of DNs, and a plurality of services may be deployed on the DN, to provide services such as data and/or a voice for the terminal device. For example, a DN is a private network of a smart factory, a sensor installed in a workshop in the smart factory may be a terminal device, a control server of the sensor is deployed in the DN, and the control server may provide a service for the sensor. The sensor may communicate with the control server, acquire instructions of the control server, and transmit collected sensor data to the control server based on the instructions. For another example, a DN is an internal office network of a company, a mobile phone or a computer of an employee of the company may be a terminal device, and the mobile phone or the computer of the employee may access information, data resources, and the like on the internal office network of the company.

In FIG. 1A, Nausf, Nnef, Npcf, Nudm, Naf, Namf, Nsmf, N1, N2, N3, N4, and N6 are interface serial numbers. For meanings of these interface serial numbers, refer to meanings defined in the 3rd generation partnership project (3rd generation partnership project, 3GPP) standard agreement. This is not limited herein.

FIG. 1B is a schematic diagram of a 5G network architecture based on a point-to-point interface. For descriptions of functions of network elements in the architecture, refer to the descriptions of the functions of the corresponding network elements in FIG. 1A. Details are not described herein again. A main difference between FIG. 1B and FIG. 1A lies in that interfaces among the network elements in FIG. 1B are point-to-point interfaces instead of service-based interfaces.

In the architecture shown in FIG. 1B, names and functions of the interfaces among the network elements are as follows:
(1) N7 is an interface between a PCF and an SMF, and may be configured to deliver a protocol data unit (protocol data unit, PDU) session granularity and a service data flow granularity control policy.
(2) N15 is an interface between the PCF and an AMF, and may be configured to deliver a UE policy and an access control-related policy.
(3) N5 is an interface between an AF and the PCF, and may be configured to deliver an application service request and report a network event.
(4) N4 is an interface between the SMF and a UPF, and may be configured to transmit information between a control plane and a user plane, including delivery of a forwarding rule, a QoS control rule, a traffic statistics rule, and the like of the control plane to the user plane, and information reporting of the user plane.
(5) N11 is an interface between the SMF and the AMF, and may be configured to transfer PDU session tunnel information between a RAN and the UPF, transfer a control message to be sent to a UE, transfer radio resource control information to be sent to the RAN, and the like.
(6) N2 is an interface between the AMF and the RAN, and may be configured to transfer radio bearer control information from a core network side to the RAN, and the like.
(7) N1 is an interface between the AMF and the UE, and may be configured to transfer a QoS control rule and the like to the UE.
(8) N8 is an interface between the AMF and a UDM, and may be used by the AMF to acquire access and mobility management-related subscription data and authentication data from the UDM, used by the AMF to register UE current mobility management-related information to the UDM, and the like.
(9) N10 is an interface between the SMF and the UDM, and may be used by the SMF to acquire session management-related subscription data from the UDM, used by the SMF to register UE current session-related information to the UDM, and the like.
(10) N35 is an interface between the UDM and a UDR, and may be used by the UDM to acquire user subscription data information from the UDR.
(11) N36 is an interface between the PCF and the UDR, and may be used by the PCF to acquire policy-related subscription data and application data-related information from the UDR.
(12) N12 is an interface between the AMF and an AUSF, and may be used by the AMF to initiate an authentication procedure to the AUSF, where an SUCI may be carried as a subscription identifier.
(13) N13 is an interface between the UDM and the AUSF, and may be used by the AUSF to acquire a user authentication vector from the UDM, to perform the authentication procedure.

It may be understood that the foregoing network element or function may be a network element in a hardware device, or may be a software function running on dedicated hardware, or may be a virtualization function instantiated on a platform (for example, a cloud platform). Optionally, the foregoing network element or the function may be implemented by one device, may be implemented by a plurality of devices jointly, or may be a functional module in one device. This is not specifically limited in this embodiment of this application.

Currently, the 5G network architecture adopts a bus mounting manner, but security access control still adopts centralized authentication and authorization. The 5G network architecture and a subsequent security architecture cannot support application scenarios of decentralization/weak centralization and multi-party consensus and mutual trust of future 6G.

In view of this, an embodiment of this application provides a communication method. The method provides a distributed authentication manner.

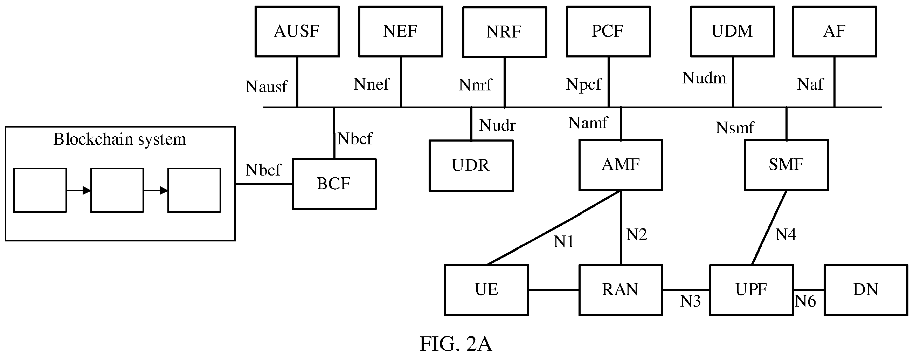

FIG. 2A is a schematic diagram of an architecture of a communication system according to an embodiment of this application. The system includes a first network and a second network (or referred to as a trust management network). For example, the first network may be a conventional telecommunication network, and the second network may be a blockchain system. For example, a new function is added to the telecommunication network in FIG. 2A based on the 5G network architecture shown in FIG. 1A. The following uses an example in which the second network is a blockchain system, given that the new function is a blockchain function (blockchain function, BCF), the BCF may be configured to directly or indirectly communicate with some or all network elements/devices/functions in the telecommunication network, and may further communicate with a node in the blockchain system. It should be understood that, the BCF is merely a representative, and may be defined as another name in the future. This is not limited in this application. In this embodiment of this application, distributed authentication and authorization may be implemented by using the BCF.

Functions of the BCF are described as follows:
(1) An inter-operator/intra-operator mobility anchor of a trust protocol is provided. For example, the BCF network element may be used as a mobility anchor in the first network and the second network in FIG. 2A.
(2) A capability of communicating with a data storage system is provided. For example, the BCF network element may provide a function to use information as structured data to be stored into a UDR/BCDR for retrieval. For example, the information is subscription detail information, a credential related to a trust chain, a trusted member list, and the like. The retrieval may be understood as acquiring stored data from a storage unit. Similarly, the BCF network element may further have a function to store unstructured data into the UDSF for retrieval.
(3) A protocol/data translation capability is provided, for example, converting data of the conventional telecommunication network into a readable format of the blockchain node. For example, when data in the telecommunication network is stored in the blockchain node, the data needs to be converted into data in the readable format of the blockchain node. For example, before user data generated in the telecommunication network is added to the blockchain node, if the user data is in an unreadable format of the blockchain node, the user data needs to be converted into the readable format of the blockchain node, and then sent to the blockchain node.
(4) A trust chain anchor is provided to determine whether different domains are mutually trusted, for example, determine, by determining whether a PLMN AMF and an NPN AMF belong to a same trusted domain, whether a trust relationship exists between a PLMN and an NPN.
(5) A blockchain service subscription management portal is provided. As a subscription management portal, the BCF network element performs management on blockchain services (such as access authentication) subscribed by a user in the UDR/BCDR, for example, services including adding, deleting, modifying, and the like.
(6) A function to upload and retrieve data from a blockchain database is provided.
(7) A function to assist in modifying or deleting data in a case of an editable blockchain mechanism is provided.

Table. 1 provides examples of messages that may be involved when the BCF network element is configured to provide the foregoing services.

**Table 1**

| Service name | Description |
|---|---|
| Nbcf_Checkpoint (checkpoint) | An NF consumer checks whether a blockchain technology is applied. |
| Nbcf_get (acquisition) | The NF consumer retrieves data from a blockchain. |
| Nbcf_credentials (credential) | The NF consumer requests credential information for a target UE according to the trust protocol. |
| Nbcf_update (update) | The consumer NF modifies or deletes associated information. |
| Nbcf_notify (notifying) | Other NF consumers are allowed to subscribe to or acquire blockchain-related events and statistical information. |

It should be noted that: (1) Because functions of the BCF network element cannot be exhaustive, the functions described above are merely examples, and another function may be further added to the BCF network element. This is not limited in this embodiment of this application. Any function related to the blockchain system may be integrated into the BCF network element. (2) In the foregoing FIG. 2A, an example in which the BCF is integrated into a control plane is shown. The BCF may be further integrated into a user plane. This is not limited in this embodiment of this application. (3) A deployment form of the BCF in the network architecture shown in FIG. 2A is merely an example. The BCF may be an independent function, or may be integrated into an existing network element device or function as an atomic function, to be used as a new capability of the existing network element device or function. (4) The network architecture shown in FIG. 2A is merely an example. In actual application, the network architecture to which embodiments of this application are applicable may be used for more or fewer functions and/or network element devices than those in FIG. 2A. This is not limited in this embodiment of this application.

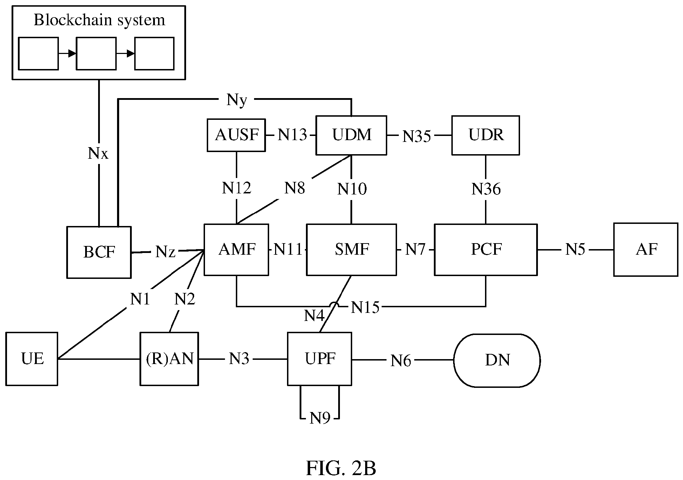

In FIG. 2A, Nbcf is a collective term of interfaces with BCFs as endpoints. An interface between the BCF and each NF is further specifically defined. FIG. 2B is a schematic diagram of a new network architecture based on a point-to-point interface. For descriptions of functions of network elements in FIG. 2B, refer to the descriptions of the functions of the corresponding network elements in FIG. 1A or FIG. 2A. Details are not described again. A main difference between FIG. 2B and FIG. 2A lies in that interfaces among the network elements in FIG. 2B are point-to-point interfaces instead of service-based interfaces. For similarities between FIG. 2B and FIG. 1B, refer to the descriptions of FIG. 1B. The following describes only newly added interfaces.
(1) Nz is an interface between a BCF and an NF, and may be configured to acquire information from the NF or send information to the NF. FIG. 2B shows an example in which the NF is an AMF, and the NF may be any function/network element in an existing network or a future network.
(2) Ny is an interface between a BCF and a data storage node (for example, a UDM), and may be configured to send to-be-stored data to the UDM or acquire data from the UDM.
(3) Nx is an interface between the BCF and a second network node (for example, a blockchain node), and may be configured to acquire blockchain data or store data in the blockchain node.

It should be noted that FIG. 2B is merely an example (only the NZ interface, the NX interface, and the NY interface are shown). Actually, in this application, the BCF may directly interact with any NF. For example, the BCF may have an interface with any existing network element or function including an SMF, the PCF, a UPF, a RAN, a UDR, an AMF, and the like. The BCF may further directly or indirectly communicate with a new network element or function in the future. This is not limited in this embodiment of this application. Interfaces between the BCF and different network elements or functions may be further specifically defined. For example, an interface between the BCF and the AMF may be referred to as Ny1, and an interface between the BCF and the SMF may be referred to as Ny2.

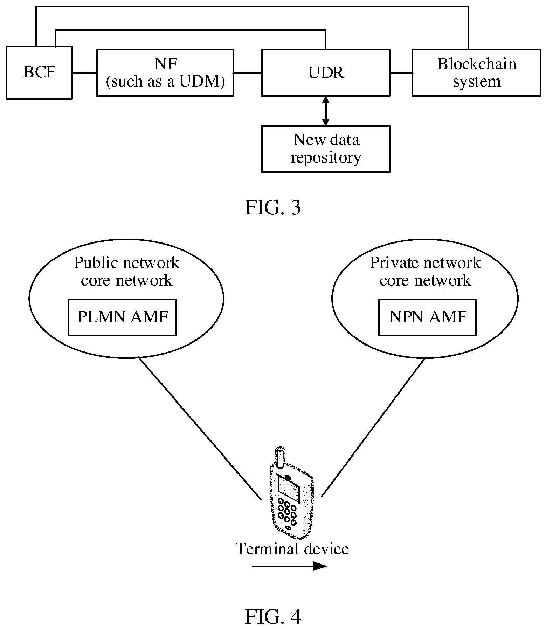

With introduction of the trust management network and the BCF, an architecture of a data storage system may need to be adjusted. For example, to support many operations of the trust management network (such as the blockchain system), new data types and credentials may need to be stored and processed. FIG. 3 is a schematic diagram of a new architecture of a data storage system according to an embodiment of this application. As shown in FIG. 3, a UDR is used as an example. A BCF may have a capability of accessing the UDR through another NF (for example, a UDM) or may directly access the UDR. The UDR in this embodiment of this application may be updated to adapt to extension of requirements of the BCF and the trust management network, or a function of the UDR may not be adjusted, but a new repository is singly added, where the new repository is configured to meet the requirements of the BCF and the trust management network. The UDR may have an internal interface with the new repository to adapt interactions of several data items required by future services. It should be understood that, the BCF may further have another interface. For example, for a trust management network database (for example, a blockchain database), the BCF needs to have both an interface that can access the blockchain database and an interface that can access a telecommunication network data repository.

It should be noted that, in this embodiment of this application, names of newly added network elements/functions (including the BCF), interfaces, repositories, and the like are merely alternative names for ease of description, and may be defined as other names in the future. This is not limited in this application.

The following uses a blockchain system as an example to describe application of the trust management network.

In this embodiment of this application, a consortium blockchain may be created by using a blockchain technology. The consortium blockchain may be considered as a trusted consensus database and a trust consortium. In other words, the blockchain may be maintained by more participants jointly. Each participant on a chain constructs a trust consortium through the chain. Each transaction (the transaction is a carrier of on-chain data) on the chain is written after the participants reach a consensus. For example, if three organizations A, B, and C form a consortium blockchain, the three organizations will participate in chain generation and maintenance. Each organization generates a chain in a formula manner. Information about the chain is stored in each organization in a distributed manner, and information owned by the organizations is consistent. For example, information about a member may be stored or may not be stored on the chain. It should be noted that, a form of information on the chain may depend on a specific service. This is not limited in this embodiment of this application.

In this embodiment of this application, the consortium blockchain may be independent of a core network, and a plurality of core networks may share one consortium blockchain. For example, a plurality of operators may form a consortium blockchain. Each operator has a core network, and each core network may have a BCF. The BCF may acquire information about the consortium blockchain from a blockchain node. In a same consortium blockchain, all members in the chain do not need to rely on a centralized system to perform an operation.

FIG. 4 is a schematic diagram of an application scenario of a consortium blockchain according to an embodiment of this application. In this scenario, the system includes a public network core network and a private network core network. The public network core network and the private network core network are relative concepts. For example, the public network core network may be a communication network constructed by a network service provider (for example, an operator) and used by public users, that is, an operator network. Communication lines of a public network are shared by public users, such as a PLMN network. The private network core network refers to a private communication network, such as an NPN, established in a local geographical area, such as a school, a factory, an enterprise, and an organization. Alternatively, the private network core network is irrelevant to a physical location or range, and is a virtual communication network that serves a user group of a same enterprise or team. Service logic in the network is the same or different services are related to each other in terms of service procedures, such as an enterprise network of a multinational enterprise.

For example, a network architecture of the public network core network or the private network core network may be the network architecture shown in FIG. 2B. For details, refer to the foregoing related descriptions of FIG. 2B. Details are not described herein again. A first network element device, a second network element device, a third network element device, and a fourth network element device in this application may be respectively an AMF in the public network core network, an AMF in the private network core network, a BCF (in the public network core network), and a UDR/BCDR in FIG. 4, or may be network elements that have functions of the AMF in the public network core network, the AMF in the public network core network, the BCF (in the public network core network), and the UDR/BCDR in future communication such as a 6th generation (6th generation, 6G) network. This is not limited in this application.

It should be noted that a terminal device in FIG. 4 is shown by using a mobile phone as an example. Actually, the terminal device may alternatively be another device. This is not limited in this embodiment of this application.

The following uses an example in which the public network core network is a PLMN network and the private network core network is an NPN network for description. For ease of description, the following uses an example in which the first network element device, the second network element device, the third network element device, the fourth network element device, and the terminal device are respectively a PLMN AMF, an NPN AMF, a (PLMN) BCF, a UDR/BCDR, and a UE for description.

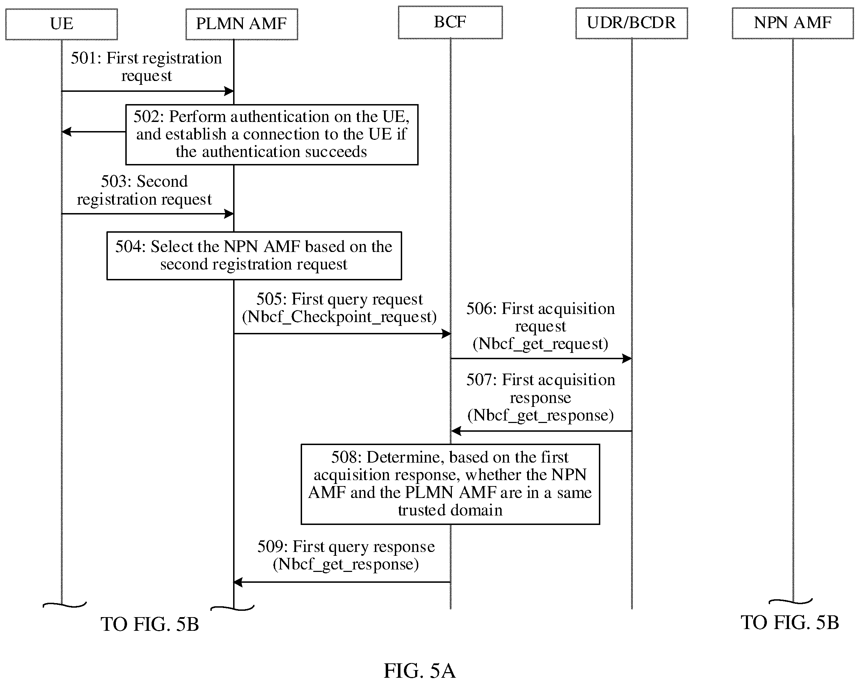

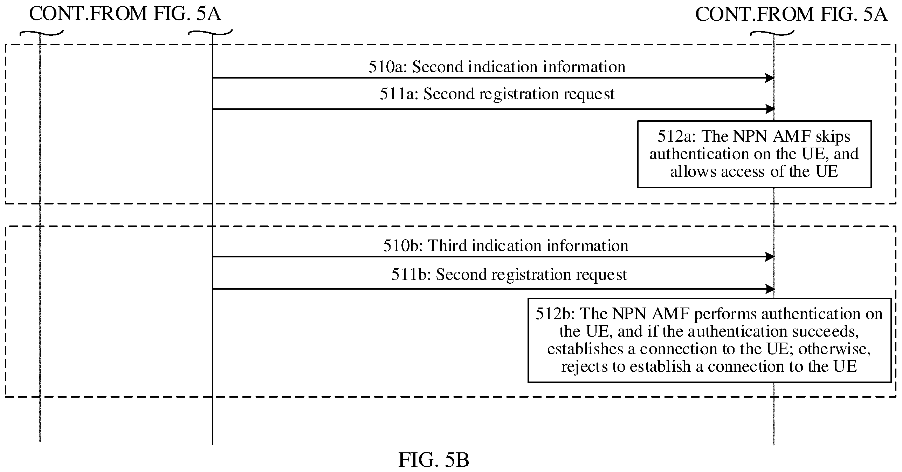

The following describes a communication method of distributed security authentication based on the network architecture shown in FIG. 4. FIG. 5A and FIG. 5B are schematic flowcharts of the communication method. The method may be applied to the communication system shown in FIG. 4. As shown in FIG. 5A and FIG. 5B, the method includes the following steps:

Step 501: The UE sends a first registration request to the PLMN AMF, where the first registration request is used to request to access the PLMN AMF. Correspondingly, the PLMN AMF receives the first registration request sent by the UE.

Step 502: The PLMN AMF performs authentication on the UE, and if the authentication succeeds, the PLMN AMF establishes a connection to the UE. A manner in which the PLMN AMF establishes the connection to the UE may be a manner appointed based on an existing protocol. Details are not described herein again.

Step 503: The UE sends a second registration request to the PLMN AMF, where the second registration request is used to request the UE to access the NPN AMF. Correspondingly, the PLMN AMF receives the second registration request sent by the UE.

In an implementation, a format of a registration request that is sent by the UE to the PLMN AMF and that is used to access the PLMN AMF may be the same as that of a registration request that is sent to the PLMN AMF and that is used to access the NPN AMF. Therefore, the first registration request and the second registration request may be distinguished based on information included in the first registration request and the second registration request. For example, the first registration request and the second registration request may be distinguished based on different values of fields included in the first registration request and the second registration request. For example, if an indication field of a registration request is 100, it indicates that the registration request is used to request to access the AMF in the public network core network; and if the indication field of the registration request is 101, it indicates that the registration request is used to request to access the AMF in the private network core network. The field may be an existing field or may be an extended field. This is not limited in this embodiment of this application. In addition, the first registration request may further include but is not limited to an identifier of the UE. The second registration request may further include but is not limited to the identifier of the UE and an identifier of the AMF in the private network core network that the UE requests to access.

Step 504: The PLMN AMF selects a corresponding NPN AMF based on information in the second registration request.

For a specific implementation of step 504, refer to a process followed upon AMF selection described in section 6.3.5 of TS 23.501 [4] in the 3rd generation partnership project (3rd generation partnership project, 3GPP) standard protocol. Details are not described herein.

Step 505: The PLMN AMF sends a first query request (for example, Nbcf_Checkpoint_request) to the BCF. Correspondingly, the BCF receives the first query request sent by the PLMN AMF.

For example, the first query request includes but is not limited to an identifier of the NPN AMF determined in step 504, and the first query request is used to request to query whether the NPN AMF is in a trusted domain of the PLMN AMF. For example, the trusted domain may be a consortium blockchain of the PLMN network stored in the blockchain system. The trusted domain may include another network or organization on the same consortium blockchain. Information about the trusted domain may be stored in a data storage node in a telecommunication network, for example, the UDR/BCDR, after being acquired by the BCF network element from a blockchain node. Alternatively, the trusted domain may be a network or an organization that is determined in another manner and that has a trust relationship with the PLMN network. This is not limited in this embodiment of this application.

Step 506: The BCF sends a first acquisition request (for example, Nbcf_get_request) to the data storage node. Correspondingly, the data storage node receives the first acquisition request sent by the BCF.

For example, the first acquisition request includes but is not limited to an identifier of the PLMN AMF or the identifier of the NPN AMF, and may further include the identifier of the UE and/or a service identifier. The first acquisition request is used to request to acquire the information about the trusted domain. The service identifier is used to identify a service requested by the UE.

Step 507: The data storage node sends a first acquisition response (for example, Nbcf_get_response) to the BCF. Correspondingly, the BCF receives the first acquisition response sent by the data storage node.

For example, if the first acquisition request carries the identifier of the PLMN AMF, the first acquisition response may include the information about the trusted domain associated with the PLMN AMF. For another example, if the first acquisition request carries the identifier of the NPN AMF, the first acquisition response may include information about a trusted domain associated with the NPN AMF. For still another example, if the first acquisition request carries the identifier of the PLMN AMF and the service identifier, the first acquisition response may include information about a trusted domain associated with the service identifier in the PLMN AMF. For still another example, if the first acquisition request carries the identifier of the NPN AMF and the service identifier, the first acquisition response may include information about a trusted domain associated with the service identifier in the NPN AMF.

Step 508: The BCF determines, based on the first acquisition response, whether the NPN AMF and the PLMN AMF are in a same trusted domain.

Step 509: The BCF sends a first query response (for example, Nbcf_Checkpoint_response) to the PLMN AMF, where the first query response indicates whether the NPN AMF and the PLMN AMF are in the same trusted domain.

For example, the first query response includes first indication information, and the first indication information has different values, which respectively indicate two states. The two states include a state 1: the NPN AMF and the PLMN AMF are in the same trusted domain; and a state 2: the NPN AMF and the PLMN AMF are not in the same trusted domain. In a possible implementation, the first indication information includes at least one bit. One bit is used as an example. When a value of the bit is 1, it indicates the state 1, and when a value of the bit is 0, it indicates the state 2. It should be understood that, the value is merely an example, and states represented by different values are not limited in this embodiment of this application. Alternatively, a bit of a value 0 may indicate the state 1, and a bit of a value 1 may indicate the state 2.

Step 510a: If the first query response indicates that the NPN AMF and the PLMN AMF are in the same trusted domain, the PLMN AMF sends second indication information to the NPN AMF, where the second indication information indicates the NPN AMF to skip authentication on the UE. Correspondingly, the NPN AMF receives third indication information sent by the PLMN AMF.

In an embodiment, the second indication information includes the identifier of the UE, and the second indication information may be sent together with the second registration request, or may be separately sent from the second registration request. When receiving the second registration request of the UE that is forwarded by the PLMN AMF, the NPN AMF skips authentication on the UE.

In another embodiment, the second indication information may not include the identifier of the UE, and the second indication information may be sent together with the second registration request. When receiving the second indication information and the second registration request, the NPN AMF skips authentication on the UE indicated by the second registration request.

In a third embodiment, the second indication information may include the identifier of the PLMN AMF or does not include the identifier of the PLMN AMF. When receiving a registration request sent by the PLMN AMF, the NPN AMF skips authentication on a UE in the registration request. It should be understood that, even if the second indication information does not include the identifier of the PLMN AMF, the NPN AMF may determine, by receiving the second indication information, that a peer end is the PLMN AMF.

Step 511a: The PLMN AMF sends the second registration request to the NPN AMF. Correspondingly, the NPN AMF receives the second registration request sent by the PLMN AMF.

Step 512a: The NPN AMF skips authentication on the UE, and allows access of the UE.

After step 510a and before step 512a, the NPN AMF may further perform an operation performed by the PLMN AMF in step 505, that is, the NPN AMF initiates a verification request to the BCF, to request to verify whether the PLMN AMF and the NPN AMF are in the same trusted domain. For example, the process may include: The NPN AMF sends a second query request to the BCF, where the second query request is used to query whether the NPN AMF and the PLMN AMF are in the same trusted domain. The BCF may be a BCF in the private network core network, or may be the foregoing BCF in the public network core network when the private network core network shares a same BCF with the public network core network. Then, the BCF performs a procedure of step 506 to step 508. Details are not described herein again. The BCF sends a second query response to the NPN AMF, where the second query response indicates whether the NPN AMF and the PLMN AMF are in the same trusted domain. If the NPN AMF and the PLMN AMF are in the same trusted domain, when receiving the second registration request sent by the PLMN AMF, the NPN AMF skips authentication on the UE indicated by the second registration request.

Step 510b: If the first query response indicates that the NPN AMF and the PLMN AMF are not in the same trusted domain, the PLMN AMF notifies the NPN AMF that the PLMN AMF is not in the trusted domain of the NPN AMF.

In an implementation, the PLMN AMF may send an empty message for indication, or send third indication information for sending, where the third indication information indicates that the NPN AMF and the PLMN AMF are not in the same trusted domain.

Step 511b: The PLMN AMF sends the second registration request to the NPN AMF. Correspondingly, the NPN AMF receives the second registration request sent by the PLMN AMF.

Step 512b: The NPN AMF performs authentication on the UE, and if the authentication succeeds, establishes a connection to the UE; otherwise, rejects to establish a connection to the UE.

For example, between step 510b and step 511b, the NPN AMF may further perform verification again by using the BCF, to verify whether the NPN AMF and the PLMN AMF are in the same trusted domain. For details, refer to the foregoing related descriptions of step 512a. Details are not described herein again.

For a specific implementation method of step 512b, refer to a manner defined in the existing protocol. Details are not described herein again.

According to the foregoing design, if the NPN AMF and the PLMN AMF are in the same trusted domain, when the UE accesses the NPN AMF, secondary authentication on the UE may be skipped. That is, when a plurality of trusted entities in a same consortium blockchain access a same UE, verification may be performed only once, and the NPN AMF does not need to perform authentication on the UE again. In other words, if authentication on the UE by one of the trusted entities succeeds, when another entity in a trusted domain of the trusted entity accesses the UE, authentication on the UE may be skipped, to implement multi-party consensus and mutual trust. Compared with a manner of centralized authentication and authorization, the method provides a secure access mechanism that can be implemented in a decentralization/weak centralization network architecture.

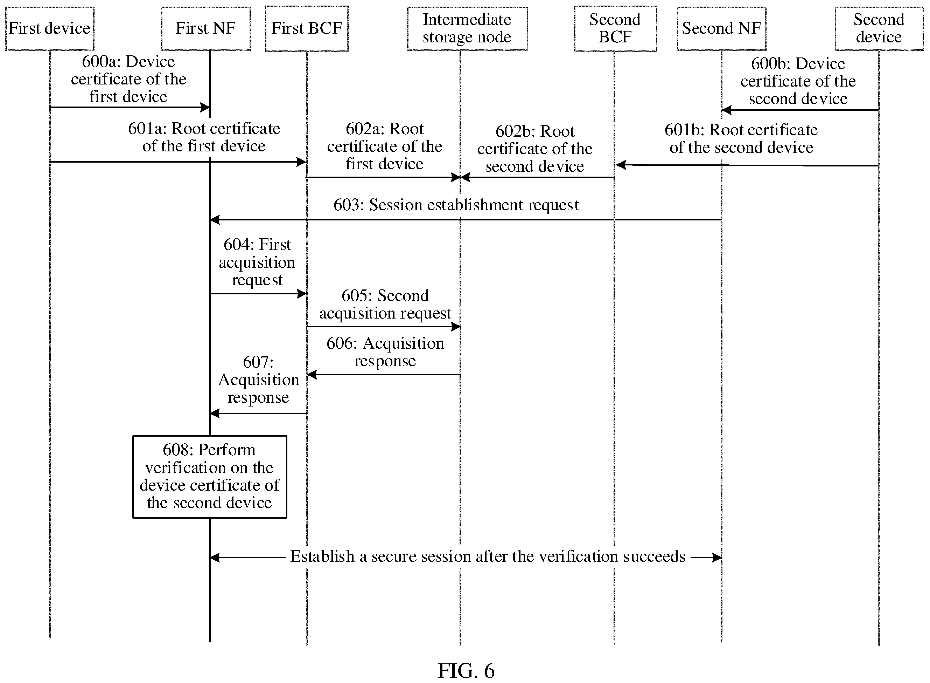

In the system architecture provided in this embodiment of this application, distributed cross trust communication may be further implemented, that is, devices in different trusted domains initiate a secure session. FIG. 6 shows a session establishment method according to an embodiment of this application. In the method shown in FIG. 6, a first trusted domain is used as an example for description. For interactions between network elements/devices in a second trusted domain, refer to descriptions of specific executed steps of the first trusted domain. Details are not described herein again. As shown in FIG. 6, the method includes the following steps:

Step 600a: A first device in the first trusted domain sends a device certificate of the first device to a first functional network element in the first trusted domain. Correspondingly, the first functional network element receives the device certificate sent by the first device.

A trust credential of a device may be in a plurality of forms including a device certificate, a fingerprint, a token, and the like. The device certificate is used as an example for description. The device certificate in this specification may also be replaced with the fingerprint, the token, or the like.

It should be noted that, the first functional network element may be a new function, device, network entity, or the like. The first functional network element may be independently deployed, or may be integrated into an existing network element as a function of the network element. This is not limited in this embodiment of this application.

Step 601a: The first device sends a root certificate of the first device to a first BCF. Correspondingly, the first BCF receives the root certificate sent by the first device.

Step 602a: The first BCF sends the root certificate of the first device to an intermediate storage node. Correspondingly, the intermediate storage node receives the root certificate that is of the first device that is sent by the first BCF.

The intermediate storage node may be shared by devices of a plurality of trusted domains, and devices in different trusted domains may communicate with the intermediate storage node through a BCF. Specifically, the intermediate storage node may be a blockchain system, and may be configured to store root certificates of the devices in different trusted domains.

In the foregoing steps, the first trusted domain and the second trusted domain are different trusted domains. For example, the first trusted domain belongs to a telecommunication operator network, and the second trusted domain belongs to a mobile operator network. Correspondingly, the first device may be a telecommunication operator device, and a second device may be a mobile operator device. Alternatively, the first trusted domain and the second trusted domain are two different private networks. For example, the first trusted domain and the second trusted domain are two different enterprise private networks.

It should be noted that, there is no strict time sequence limitation between step 600a to step 602a and step 600b to step 602b. This is not limited in this embodiment of this application.

Step 603: The first functional network element receives a session establishment request from a second functional network element, where the session establishment request includes a device certificate of the second device.

Step 604: The first functional network element sends a first acquisition request to the first BCF, where the first acquisition request is used to request to acquire a root certificate of the second device in the second trusted domain. Correspondingly, the first BCF receives the acquisition request sent by the first device.

The first BCF may be a BCF in a core network in which the first device is located. The acquisition request may carry an identifier of the second device. It should be noted that, the device certificate is issued by the root certificate. Therefore, to verify a device certificate of a peer end, a root certificate of the peer end needs to be acquired first.

Step 605: The first BCF sends a second acquisition request (for example, Nbcf_credentials_ request) to the intermediate storage node, where the second acquisition request is used to request to acquire the root certificate of the second device.

For example, the second acquisition request and the first acquisition request are in a same format. The second acquisition request may be the first acquisition request. If the second acquisition request is the first acquisition request, the first BCF transparently transmits the first acquisition request to the intermediate storage node. It should be understood that, the first acquisition request should be in a format that can be identified by the intermediate storage node.

For another example, a format of the second acquisition request is different from a format of the first acquisition request. The second acquisition request is in a format that can be identified by the intermediate storage node. In other words, the first BCF may have a protocol translation function, can simultaneously identify the format of the first acquisition request sent by the first device, and can generate the second acquisition request according to an information format that can be identified by the intermediate storage node.

Step 606: The intermediate storage node sends an acquisition response (for example, Nbcf_credentials_response) to the first BCF, where the acquisition response includes the root certificate of the second device. Correspondingly, the first BCF receives the acquisition response sent by the intermediate storage node.

In a possible implementation, if the first BCF receives the acquisition request for the root certificate of the second device for a first time, that is, the first BCF does not locally cache the root certificate of the second device, step 503 to step 504 may be performed. In an optional implementation, after acquiring the root certificate of the second device, the first BCF may locally cache the root certificate for being used when a device requests the root certificate next time, thereby reducing overheads and shortening a delay. In another optional implementation, after acquiring the root certificate of the second device, the first BCF may regularly request the intermediate storage node to update the root certificate of the second device for being used when a device requests the root certificate next time. The "regularly" herein may be periodic or non-periodic. This is not limited in this embodiment of this application.

Step 607: The first BCF sends the acquisition response to the first functional network element. Correspondingly, the first functional network element receives the acquisition response sent by the first BCF.

In an optional implementation, after acquiring the root certificate of the second device, the first functional network element may locally cache the root certificate for being used upon next verification on the device certificate of the second device. In another optional implementation, after acquiring the root certificate of the second device, the first functional network element may regularly request the first BCF to update the root certificate of the second device, so that after the root certificate of the second device changes, the first functional network element can acquire a changed root certificate in time for being used upon next verification, to shorten a delay. The "regularly" herein may be periodic or non-periodic. This is not limited in this embodiment of this application.

Step 608: The first functional network element performs verification on the device certificate of the second device by using the root certificate of the second device, and if the verification succeeds, the first functional network element establishes a secure session connection to the second functional network element.

It should be noted that, the foregoing scenario is unidirectional verification (that is, the first functional network element performs verification on the second device), which is described from a perspective of the first functional network element. In some other scenarios of establishing a security session, bidirectional verification may be alternatively performed. In this case, the first functional network element may further transfer the device certificate of the first device to the second functional network element, and the second functional network element may perform procedure steps performed by the first functional network element. Differently, the second functional network element is configured to acquire the root certificate of the first device, and performs verification on the device certificate of the first device by using the root certificate of the first device. After verification of both parties succeeds, a secure session is started. In the bidirectional verification scenario, if verification of one party fails, this connection is rejected.

According to the foregoing design, compared with an existing manner in which a secure session can be established, by using a root certificate locally configured with a trusted domain, only with a device configured with the root certificate, mutual authentication between devices in different trusted domains can be implemented, application scenarios are extended, operations such as configuration are reduced, an interaction process is simplified, and applicability is advanced. Further, the intermediate storage node deployed on a blockchain is tamper-resistant, thereby ensuring information security.

In the system architecture provided in this embodiment of this application, user information generated in a telecommunication network may be stored in a blockchain system through the BCF. In this case, a device in the telecommunication network may also modify the user information in the blockchain under an editable blockchain mechanism. The following describes a method for implementing personal information modification by a user.

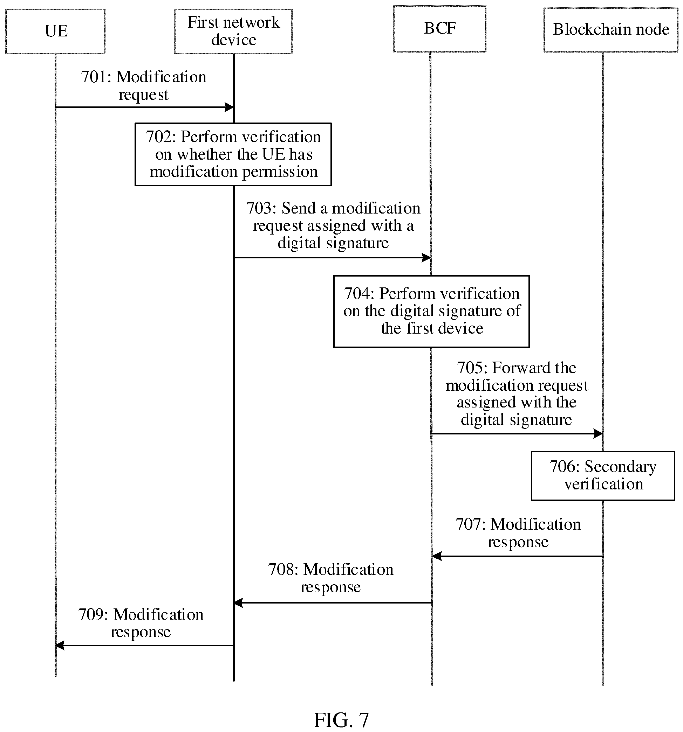

FIG. 7 is a schematic flowchart of a data update method according to an embodiment of this application. The method includes the following steps:

Step 701: A UE sends a modification request to a first network device, where the modification request is used to request to modify user data. Correspondingly, the first network device receives the modification request sent by the UE.

The first network device may be a device in an operator network accessed by the UE, for example, may be a network element in the RAN or the core network that is accessed by the UE in FIG. 2A.

Step 702: The first network device performs verification, based on the modification request, whether the UE has modification permission, and if the UE has modification permission, performs step 703; otherwise, rejects the modification request of the UE.

For example, if the data that is requested to be modified based on the modification request is data of the UE, it is determined that the UE has the modification permission; otherwise, it is determined that the UE does not have the modification permission.

Step 703: The first network device assigns a digital signature to the modification request, and sends the modification request assigned with the digital signature to the second network device. Correspondingly, the second network device receives the modification request that is sent by the first network device and that is assigned with the digital signature.

The first network device may be an operator device, and the second network device may be a BCF network element.

Step 704: The second network device (BCF) performs verification on the digital signature of the first network device based on the modification request assigned with the digital signature, and if the verification succeeds, performs step 705; otherwise, rejects the modification request of the UE.

In another possible implementation, in step 704, the BCF may alternatively not perform verification, and directly send the received modification request assigned with the digital signature to a blockchain node, or translate the received modification request acquired after the digital signature into a readable format for a blockchain system and then send the translated modification request to the blockchain node. Subsequently, the blockchain node performs verification. This manner has a low requirement on a hardware resource of the BCF.

Step 705: The second network device forwards the received modification request (for example, Nbcf_update_request) assigned with the digital signature to the blockchain node. Correspondingly, the blockchain node receives the modification request that is sent by the second network device and that is assigned with the digital signature. It should be understood that, the digital signature herein refers to the digital signature of the first network device.

Optionally, before sending the modification request assigned with the digital signature, if a format of the modification request that is sent by the first network device and that is received by the BCF is not in the readable format for the blockchain system, the BCF may further translate the modification request into the readable format for the blockchain system. Otherwise, the modification request does not need to be translated, and the digital signature is directly assigned to the modification request.

Step 706: The blockchain node performs secondary verification on the digital signature of the first network device and/or request permission of the UE, to verify whether the UE has the modification permission, and if the verification succeeds, edits and modifies the data that is requested to be modified; otherwise, rejects the modification request of the UE.

For example, the data on the blockchain node may be modified and edited based on an existing mechanism, for example, based on a technology such as chameleon hash or double-linking. How to modify the data on the blockchain node is not a focus of this patent, and is not described in detail herein.

It should be noted that, step 706 is an optional step and is not a mandatory step. In some implementable scenarios, step 706 may also not be performed, to reduce computing resource overheads in the blockchain node and shorten a delay.

Step 707: The blockchain node sends a modification response (for example, Nbcf_update_response) to the second network device. Correspondingly, the second network device receives the modification response sent by the blockchain node. The modification response includes a modification result, and the modification result may be that modification succeeds, modification does not succeed, or the like.

Step 708: The second network device sends the received modification response to the first network device. Correspondingly, the first network device receives the modification result sent by the second network device.

Optionally, if the modification response is not in a readable format for the first network device, the BCF may further translate the modification response into the readable format for the first network device.

Step 709: The first network device notifies the UE of the modification result.

According to the foregoing design, in a network scenario in which the conventional telecommunication network is combined with the blockchain system, more application such as storing the user information in the blockchain node can be implemented, and a user is granted permission to modify personal user information, thereby increasing system flexibility and improving user experience.

The foregoing mainly describes, from a perspective of interactions between the network elements, the solutions provided in this application. It may be understood that, to implement the foregoing functions, the foregoing network elements include corresponding hardware structures and/or software modules for performing the functions. A person skilled in the art should be easily aware that, in combination with the units and algorithm steps of the examples described in the embodiments disclosed in this specification, the present invention can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

It may be understood that, in the foregoing method embodiments, steps or operations correspondingly implemented by the terminal device may also be implemented by a component (for example, a chip or a circuit) configured in the terminal device, steps or operations correspondingly implemented by an access device may also be implemented by a component (for example, a chip or a circuit) configured in the access device, and steps or operations correspondingly implemented by a policy control network element may also be implemented by a component (for example, a chip or a circuit) configured in the policy control network element.

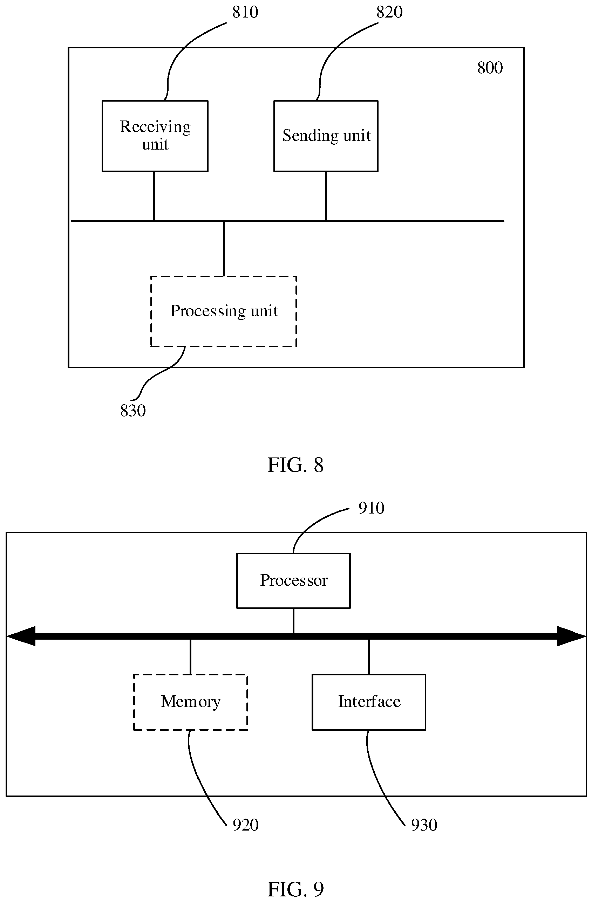

FIG. 8 is a schematic diagram of a communication apparatus according to an embodiment of this application. The apparatus is configured to implement the steps correspondingly performed by the first network element device, the second network element device, the third network element device, or the fourth network element device in any embodiment shown in FIG. 5A and FIG. 5B, or implement steps performed by a first NF (or a second NF), the first BCF (or a second BCF), or the blockchain node in the embodiment shown in FIG. 6, or implement the steps performed by the first network device, the first BCF, the BCF, or the blockchain node in the embodiment shown in FIG. 7. As shown in FIG. 8, the apparatus 800 includes a receiving unit 810 and a sending unit 820. Optionally, the apparatus further includes a processing unit 830.

In a first embodiment, the apparatus may be configured to implement the steps performed by the first network element device (for example, the PLMN AMF) in the public network core network in the foregoing method.

The receiving unit 810 is configured to receive a first registration request sent by a terminal device, where the first registration request is used to request the terminal device to access a second network element device in a private network core network.

The sending unit 820 is configured to send a first query request to a third network element device in the public network core network.

The receiving unit 810 is further configured to receive a first query response from the third network element device.

The sending unit 820 is further configured to send first indication information to the second network element device if the first query response indicates that the second network element device is in a trusted domain associated with the communication apparatus, where the indication information indicates the second network element device to skip performing an authentication operation on the terminal device.

In a possible implementation method, before receiving the first registration request sent by the terminal device, the receiving unit 810 is further configured to receive a second registration request sent by the terminal device, where the second registration request is used to request to access a first network element device. The processing unit 830 is configured to establish a connection to the terminal device.

In a second embodiment, the apparatus may be configured to implement the steps performed by the third network element device (for example, the PLMN BCF) in the public network core network in the foregoing method.

The receiving unit 810 is configured to receive a first query request from a first network element device in the public network core network, where the first query request is used to request to query whether a second network element device is in a trusted domain associated with the first network element device.

The sending unit 820 is configured to send a first acquisition request to a fourth network element device in the public network core network.

The receiving unit 810 is further configured to receive a first acquisition response from the fourth network element device, where the first acquisition response includes information about the trusted domain associated with the first network element device.

The processing unit 830 is configured to determine, based on the information about the trusted domain and an identifier of the second network element device, whether the second network element device is in the trusted domain associated with the first network element device.

The sending unit 820 is further configured to send a first query response to the first network element device, where the first query response indicates whether the second network element device is in the trusted domain associated with the first network element device.

In a third embodiment, the apparatus may be configured to implement the steps performed by the second network element device (for example, the NPN PLMN) in the private network core network in the foregoing method.

The receiving unit 810 is configured to receive a first registration request from a first network element device in a public network core network, where the first registration request includes an identifier of a terminal device, and is used to request the terminal device to access the second network element device.

The processing unit 830 is configured to skip performing an authentication operation on the terminal device if first indication information from the first network element device is received and the first indication information indicates that the second network element device and the first network element device are in a same trusted domain.

In a possible implementation method, before the processing unit 830 skips performing the authentication operation on the terminal device, the sending unit 820 is further configured to send a second query request to a third network element device in the private network core network, where the second query request includes an identifier of the first network device, and is used to request to query whether the first network element device is in a trusted domain associated with the second network element device.

The receiving unit 810 is further configured to receive a second query response from the third network element device. The processing unit is specifically configured to skip performing the authentication operation on the terminal device if the first indication information from the first network element device is received, the first indication information indicates that the second network element device and the first network element device are in the same trusted domain, and the second query response indicates that the first network element device is in the trusted domain associated with the second network element device.

### In a fourth embodiment:

The receiving unit 810 is configured to receive a session establishment request from a second device in a second trusted domain, where the session establishment request includes a device certificate of the second device.

The sending unit 820 is configured to send an acquisition request for a root certificate of the second device to a first BCF.

The receiving unit 810 is configured to receive an acquisition response from the first BCF, where the acquisition response includes the root certificate of the second device.

The processing unit 830 is configured to perform verification on the device certificate of the second device by using the root certificate of the second device, and control the sending unit to send a session establishment response to the second device if the verification succeeds.

### In a fifth embodiment:

The receiving unit 810 is configured to receive an acquisition request for a root certificate that is of a second device and that is sent by a first device in a first trusted domain.

The sending unit 820 is configured to send the acquisition request for the root certificate of the second device to an intermediate storage node.

The receiving unit 810 is further configured to receive an acquisition response from the intermediate storage node.

The sending unit 820 is further configured to send the acquisition response to the first device, where the acquisition response includes the root certificate of the second device.

### In a sixth embodiment:

The receiving unit 810 configured to receive a modification request sent by a terminal device, where the modification request is used to request to modify user data.

The processing unit 830 is configured to: perform verification on whether the terminal device has modification permission, assign a digital signature to the modification request if the verification succeeds, and send the modification request assigned with the digital signature to the second network device by using the sending unit 820.

### In a seventh embodiment:

The receiving unit 810 is configured to receive a modification request that is assigned with a data signature and that is sent by a first network device.

The processing unit 830 is configured to: perform verification on the modification request assigned with the signature, control the sending unit 820 to send a data modification request to a blockchain node if the verification succeeds, and receive a modification response of the blockchain node through the receiving unit.

Optionally, the communication apparatus 800 may further include a storage unit. The storage unit is configured to store data or instructions (which may also be referred to as code or a program). The foregoing units may interact with or be coupled to the storage unit, to implement a corresponding method or function. For example, the processing unit may read the data or the instructions in the storage unit, to enable the communication apparatus to implement the methods in the foregoing embodiments.

It should be further understood that, division of the units in the apparatus is merely logical function division. During actual implementation, all or some of the units may be integrated into one physical entity or may be physically separated. In addition, all units in the apparatus may be implemented in a form of software invoked by a processing element, or may be implemented in a form of hardware; or some units may be implemented in a form of software invoked by a processing element, and some units are implemented in a form of hardware. For example, each unit may be a separately arranged processing element, or may be integrated into a chip of the apparatus for implementation. In addition, each unit may be stored in a memory in a form of a program, and a processing element of the apparatus invokes and executes a function of the unit. In addition, all or some of these units may be integrated, or may be implemented independently. The described processing element may alternatively be a processor, and may be an integrated circuit having a signal processing capability. During an implementation process, the steps in the foregoing methods or the foregoing units may be implemented by using a hardware integrated logic circuit in a processor element, or may be implemented in a form of software invoked by a processing element.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field-programmable gate arrays (field-programmable gate array, FPGA), or a combination of at least two of these forms of integrated circuits. For another example, when the units in the apparatus may be implemented in a form of scheduling a program by the processing element, the processing element may be a general-purpose processor, for example, a central processing unit (central processing unit, CPU) or another processor that can invoke the program. For another example, these units may be integrated together and implemented in a form of a system-on-a-chip (system-on-a-chip, SOC).

The foregoing units for receiving (for example, the receiving unit) is an interface circuit of the apparatus, and is configured to receive a signal from another apparatus. For example, when the apparatus is implemented in a manner of a chip, the receiving unit is an interface circuit used by the chip to receive a signal from another chip or apparatus. The foregoing unit for sending (for example, the sending unit) is an interface circuit of the apparatus, and is configured to send a signal to another apparatus. For example, when the apparatus is implemented in a manner of a chip, the sending unit is an interface circuit used by the chip to send a signal to another chip or apparatus.

FIG. 9 is a schematic diagram of a structure of a communication apparatus according to an embodiment of this application. The communication apparatus is configured to implement the operations corresponding to the first network element device, the second network element device, the third network element device, the fourth network element device, a first NF (or a second NF), the first BCF (or a second BCF), or the blockchain node in the foregoing embodiments. As shown in FIG. 9, the communication apparatus includes a processor 910 and an interface 930, and optionally, further includes a memory 920. The interface 930 is configured to communicate with another device.

The processor 910 may be a CPU, a microprocessor, an ASIC, or one or more integrated circuits configured to control program execution in the solutions of this application.

By using any apparatus such as a transceiver, the interface 930 is configured to communicate with another device or communication network such as the Ethernet, a radio access network (radio access network, RAN), a wireless local area network (wireless local area networks, WLAN), and a wired access network.

The memory 920 may be a ROM or another type of static storage device that can store static information and instructions, a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other optical disk storage and optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer, but is not limited thereto. The memory may independently exist and may be connected to the processor through a communication line. The memory may alternatively be integrated with the processor.

The memory 920 is configured to store computer executable instructions for executing the solutions of this application, and the processor 910 controls execution. The processor 910 is configured to execute the computer executable instructions stored in the memory 920, to implement the methods provided in the foregoing embodiments of this application.

Optionally, the computer executable instructions in this embodiment of this application may also be referred to as application program code. This is not specifically limited in this embodiment of this application.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

The various illustrative logical units and circuits described in embodiments of this application may implement or operate the described functions by using a general-purpose processor, a digital signal processor, an application-specific integrated circuit (ASIC), a field-programmable gate array (FPGA) or another programmable logical apparatus, a discrete gate or transistor logic, a discrete hardware component, or a design of any combination thereof. The general-purpose processor may be a microprocessor. Optionally, the general-purpose processor may be any conventional processor, controller, microcontroller, or state machine. The processor may also be implemented by a combination of computing apparatuses, such as a digital signal processor and a microprocessor, a plurality of microprocessors, one or more microprocessors in combination with a digital signal processor core, or any other similar configuration.

The steps of the methods or algorithms described in embodiments of this application may be directly embedded in hardware, in a software unit executed by the processor, or in a combination thereof. The software module may be stored in a RAM memory, a flash memory, a ROM memory, an EPROM memory, an EEPROM memory, a register, a hard disk, a removable disk, a CD-ROM, or any another form of a storage medium in the art. For example, the storage medium may be connected to the processor, so that the processor can read information from the storage medium and write information into the storage medium. Optionally, the storage medium may be integrated into the processor. The processor and the storage medium may be arranged in the ASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Although this application is described with reference to specific features and the embodiments thereof, apparently, various modifications and combinations may be made to this application without departing from the spirit and scope of this application. Correspondingly, the specification and accompanying drawings are merely examples of descriptions of this application defined by the appended claims, and are considered as any of or all modifications, variations, combinations or equivalents that cover the scope of this application. Apparently, a person skilled in the art can make various modifications and variations to this application without departing from the scope of this application. In this case, if the modifications and variations made to this application fall within the scope of the claims of this application and equivalent technologies thereof, this application is intended to include these modifications and variations.

## Claims

1. A communication method, comprising:
receiving, by a first network element device in a public network core network, a first registration request sent by a terminal device, wherein the first registration request is used to request the terminal device to access a second network element device in a private network core network;
sending, by the first network element device, a first query request to a third network element device in the public network core network;
receiving, by the first network element device, a first query response from the third network element device; and
sending, by the first network element device, first indication information to the second network element device if the first query response indicates that the second network element device is in a trusted domain associated with the first network element device, wherein the indication information indicates the second network element device to skip performing an authentication operation on the terminal device.

2. The method according to claim 1, wherein before the receiving, by a first network element device in a public network core network, a first registration request sent by a terminal device, the method further comprises:
receiving, by the first network element device, a second registration request sent by the terminal device, wherein the second registration request is used to request to access the first network element device; and
establishing, by the first network element device, a connection to the terminal device.

3. A communication method, comprising:
receiving, by a third network element device in a public network core network, a first query request from a first network element device in the public network core network, wherein the first query request is used to request to query whether a second network element device is in a trusted domain associated with the first network element device;
sending, by the third network element device, a first acquisition request to a fourth network element device in the public network core network;
receiving, by the third network element device, a first acquisition response from the fourth network element device, wherein the first acquisition response comprises information about the trusted domain associated with the first network element device;
determining, by the third network element device based on the information about the trusted domain and an identifier of the second network element device, whether the second network element device is in the trusted domain associated with the first network element device; and
sending, by the third network element device, a first query response to the first network element device, wherein the first query response indicates whether the second network element device is in the trusted domain associated with the first network element device.

4. A communication method, comprising:
receiving, by a second network element device in a private network core network, a first registration request from a first network element device in a public network core network, wherein the first registration request comprises an identifier of a terminal device, and is used to request the terminal device to access the second network element device; and
skipping, by the second network element device, performing an authentication operation on the terminal device if first indication information from the first network element device is received and the first indication information indicates that the second network element device and the first network element device are in a same trusted domain.

5. The method according to claim 4, wherein before the skipping, by the second network element device, performing an authentication operation on the terminal device, the method further comprises:
sending, by the second network element device, a second query request to a third network element device in the private network core network, wherein the second query request comprises an identifier of the first network device, and is used to request to query whether the first network element device is in a trusted domain associated with the second network element device; and
receiving, by the second network element device, a second query response from the third network element device; and
the skipping, by the second network element device, performing an authentication operation on the terminal device if first indication information from the first network element device is received and the first indication information indicates that the second network element device and the first network element device are in a same trusted domain comprises:
skipping, by the second network element device, performing the authentication operation on the terminal device if the first indication information from the first network element device is received, the first indication information indicates that the second network element device and the first network element device are in the same trusted domain, and the second query response indicates that the first network element device is in the trusted domain associated with the second network element device.

6. A session establishment method, wherein the method comprises:
receiving, by a first device in a first trusted domain, a session establishment request from a second device in a second trusted domain, wherein the session establishment request comprises a device certificate of the second device;
sending, by the first device, an acquisition request for a root certificate of the second device to a first network element;
sending, by the first network element, the acquisition request for the root certificate of the second device to an intermediate storage node;
receiving, by the first network element, an acquisition response from the intermediate storage node;
receiving, by the first device, an acquisition response from the first network element, wherein the acquisition response comprises the root certificate of the second device;
performing, by the first device, verification on the device certificate of the second device by using the root certificate of the second device; and
sending, by the first device, a session establishment response to the second device if the verification succeeds.

7. The method according to claim 6, wherein before the receiving, by a first device in a first trusted domain, a session establishment request sent from a second device in a second trusted domain, the method further comprises:
sending, by an operator device in the second trusted domain, a root certificate of the second trusted domain to the intermediate storage node; and
receiving, by the intermediate storage node, the root certificate of the second trusted domain, and storing the root certificate of the second trusted domain.

8. A data update method, wherein the method comprises:
receiving, by a first network device, a modification request sent by a terminal device, wherein the modification request is used to request to modify user data;
performing, by the first network device, verification on whether the terminal device has modification permission;
assigning, by the first network device, a digital signature to the modification request if the verification succeeds, and sending the modification request assigned with the digital signature to a second network device;
receiving, by the second network device, the modification request assigned with the signature, and performing verification on the modification request assigned with the signature;
sending, by the second network device, a data modification request to a blockchain node if the verification succeeds; and
receiving, by the second network device, a modification response of the blockchain node.

9. A communication apparatus, comprising:
a receiving unit, configured to receive a first registration request sent by a terminal device, wherein the first registration request is used to request the terminal device to access a second network element device in a private network core network; and
a sending unit, configured to send a first query request to a third network element device in the public network core network, wherein
the receiving unit is further configured to receive a first query response from the third network element device; and
the sending unit is further configured to send first indication information to the second network element device if the first query response indicates that the second network element device is in a trusted domain associated with the communication apparatus, wherein the indication information indicates the second network element device to skip performing an authentication operation on the terminal device.

10. The apparatus according to claim 9, wherein the apparatus further comprises a processing unit, wherein
before receiving the first registration request sent by the terminal device, the receiving unit is further configured to receive a second registration request sent by the terminal device, wherein the second registration request is used to request to access a first network element device; and
the processing unit is configured to establish a connection to the terminal device.

11. A communication apparatus, comprising:
a receiving unit, configured to receive a first query request from a first network element device in the public network core network, wherein the first query request is used to request to query whether a second network element device is in a trusted domain associated with the first network element device;
a sending unit, configured to send a first acquisition request to a fourth network element device in the public network core network, wherein
the receiving unit is further configured to receive a first acquisition response from the fourth network element device, wherein the first acquisition response comprises information about the trusted domain associated with the first network element device; and
a processing unit, configured to determine, based on the information about the trusted domain and an identifier of the second network element device, whether the second network element device is in the trusted domain associated with the first network element device, wherein
the sending unit is further configured to send a first query response to the first network element device, wherein the first query response indicates whether the second network element device is in the trusted domain associated with the first network element device.

12. A communication apparatus, comprising:
a receiving unit, configured to receive a first registration request from a first network element device in a public network core network, wherein the first registration request comprises an identifier of a terminal device, and is used to request the terminal device to access the second network element device; and
a processing unit, configured to skip performing an authentication operation on the terminal device if first indication information from the first network element device is received and the first indication information indicates that the second network element device and the first network element device are in a same trusted domain.

13. The apparatus according to claim 12, wherein before the processing unit skips performing the authentication operation on the terminal device, the sending unit is further configured to send a second query request to a third network element device in a private network core network, wherein the second query request comprises an identifier of the first network device, and is used to request to query whether the first network element device is in a trusted domain associated with the second network element device;
the receiving unit is further configured to receive a second query response from the third network element device; and
the processing unit is specifically configured to skip performing the authentication operation on the terminal device if the first indication information from the first network element device is received, the first indication information indicates that the second network element device and the first network element device are in the same trusted domain, and the second query response indicates that the first network element device is in the trusted domain associated with the second network element device.

14. A communication apparatus, wherein the communication apparatus is located in a first trusted domain and comprises:
a receiving unit, configured to receive a session establishment request from a second device in a second trusted domain, wherein the session establishment request comprises a device certificate of the second device;
a sending unit, configured to send an acquisition request for a root certificate of the second device to a first network element, wherein
the receiving unit is configured to receive an acquisition response from the first network element, wherein the acquisition response comprises the root certificate of the second device; and
a processing unit, configured to perform verification on the device certificate of the second device by using the root certificate of the second device, and control the sending unit to send a session establishment response to the second device if the verification succeeds.

15. A communication apparatus, wherein the communication apparatus is located in a first trusted domain and comprises:
a receiving unit, configured to receive an acquisition request for a root certificate that is of a second device and that is sent by a first device in the first trusted domain; and
a sending unit, configured to send the acquisition request for the root certificate of the second device to an intermediate storage node, wherein
the receiving unit is further configured to receive an acquisition response from the intermediate storage node; and
the sending unit is further configured to send the acquisition response to the first device, wherein the acquisition response comprises the root certificate of the second device.

16. A communication apparatus, comprising:
a receiving unit, configured to receive a modification request sent by a terminal device, wherein the modification request is used to request to modify user data; and
a processing unit, configured to: perform verification on whether the terminal device has modification permission, assign a digital signature to the modification request if the verification succeeds, and send the modification request assigned with the digital signature to the second network device by using the sending unit.

17. A communication apparatus, comprising:
a receiving unit, configured to receive a modification request that is assigned with a data signature and that is sent by a first network device; and
a processing unit, configured to: perform verification on the modification request assigned with the signature, control the sending unit to send a data modification request to a blockchain node if the verification succeeds, and receive a modification response of the blockchain node through the receiving unit.

18. A communication system, wherein the system comprises a first network element device in a public network core network, a second network element device in a private network core network, and a third network element device in the public network core network, wherein
the first network element device is configured to: receive a first registration request sent by a terminal device, wherein the first registration request is used to request the terminal device to access the second network element device in the private network core network, send a first query request to the third network element device, and receive a first query response from the third network element device; the first network element device sends first indication information to the second network element device if the first query response indicates that the second network element device is in a trusted domain associated with the first network element device, wherein the indication information indicates the second network element device to skip performing an authentication operation on the terminal device;
the third network element device is configured to: receive the first query request from the first network element device, wherein the first query request is used to request to query whether the second network element device is in the trusted domain associated with the first network element device; send a first acquisition request to a fourth network element device in the public network core network, and receive a first acquisition response from the fourth network element device, wherein the first acquisition response comprises information about the trusted domain associated with the first network element device; determine, based on the information about the trusted domain and an identifier of the second network element device, whether the second network element device is in the trusted domain associated with the first network element device; and send the first query response to the first network element device;
the second network element device is configured to receive the first registration request from the first network element device in the public network core network, wherein the first registration request comprises an identifier of the terminal device, and is used to request the terminal device to access the second network element device; and the second network element device skips performing the authentication operation on the terminal device if the first indication information from the first network element device is received and the first indication information indicates that the second network element device and the first network element device are in a same trusted domain.

19. A communication device, wherein the network device comprises a processor and a memory, the processor is configured to execute instructions stored in the memory, and when the instructions are run, the apparatus is enabled to perform the method according to claim 1 or 2, or the method according to claim 3, or the method according to claim 4 or 5, or the method according to claim 6 or 7, or the method according to claim 8.

20. A computer-readable storage medium, comprising instructions, wherein when the instructions are executed, the method according to claim 1 or 2, or the method according to claim 3, or the method according to claim 4 or 5, or the method according to claim 6 or 7, or the method according to claim 8 is implemented.

21. A computer program product, wherein when the computer program product runs on a computer, the computer is enabled to perform the method according to claim 1 or 2, or the method according to claim 3, or the method according to claim 4 or 5, or the method according to claim 6 or 7, or the method according to claim 8.
